# EUROPÄISCHE PATENTSCHRIFT

(11) **EP 0 480 342 B1**
(45) Veröffentlichungstag und Bekanntmachung des Hinweises auf die Patenterteilung: **27.12.1996**
(21) Anmeldenummer: 91117007.4
(22) Anmeldetag: 05.10.1991
(51) Int. Cl.: C09K 3/30, C08J 9/12, C08G 18/10

(54) **Einkomponentenmischung zur Herstellung von Polyurethanschaum**
Single component composition for the production of polyurethane foam
Composition à un seul constituant pour la production d'une mousse de polyuréthane

(30) Priorität: 11.10.1990 DE 4032294
(43) Veröffentlichungstag der Anmeldung: 15.04.1992
(73) Patentinhaber: TBS ENGINEERING F. W. MUMENTHALER, CH-9014 St. Gallen (CH)
(72) Erfinder: Mumenthaler, Friedrich Walter, Dipl.-Ing. HTL, CH-9010 St. Gallen (CH)
(74) Vertreter: Thiel, Christian, Dr. Dipl.-Chem.

(56) Entgegenhaltungen:
- DE-A- 3 911 784
- DE-A- 4 025 843
- GB-A- 1 460 863
- GB-A- 2 053 943

## Beschreibung

Die Erfindung betrifft eine Einkomponentenmischung zur Herstellung von Polyurethanschaum, welche frei ist von Treibgasen auf Basis chlorierter Fluorkohlenwasserstoffe wie Trichlorfluormethan, Dichlordifluormethan oder Chlordifluormethan, welche die Ozonschicht schädigen. Die Erfindung betrifft ferner ein Verfahren zur Herstellung solcher Einkomponentenmischung.

Die Herstellung von Einkomponenten Mischungen für Polyurethan schäume ist allgemein bekannt und kann wie folgt dargestellt werden.

Dazu wird ein Gemisch aus wahlweise Polyolen, Weichmacher, Flammschutzmitteln, Schaumstabilisatoren und Katalysatoren mit Isocyanat, z.B. Roh- MDI im gewünschten Verhältnis zur Reaktion gebracht. Dies geschieht in einem Reaktor oder einem Druckbehälter, z.B. einer Aerosoldose.

Die Prepolymerbildung erfolgt selbständig unter positiver Wärmetönung. Die Prepolymermischung wird anschließend mit Druckgas, wie FCKW (Fluorchlorkohlenwasserstoff) oder KW (Kohlenwasserstoff) beaufschlagt. Das Druckgas erfüllt drei Aufgaben:
1) Austreibgas der Schaummasse aus dem Druckbehälter
2) Verschäumungsmittel für die Schaummasse
3) Lösungsmittel zur Viskositätserniedrigung der Schaummasse.

Die Druckgase werden im Anwendungsfall im erheblichen Maße freigesetzt und bilden entweder, wie bei den KW, ein zündfähiges Gemisch oder schädigen, wie bei den FCKW, die Ozonschicht.

Aus GB-A-1 460 863 ist die Verwendung von He, CO₂, N₂, O₂ oder Luft als Treibgas zur Herstellung von Polyurethanschäumen bekannt. Diese Polyurethanschäume sind allerdings nicht zum Austrag aus Druckbehältern bestimmt. Ferner beschreibt GB-A-2 053 943 Zusammensetzungen zur Herstellung von Druckdosen-Polyurethanschäumen, bei denen umweltverträgliche Abmischungen auf Kohlenwasserstoffbasis in Abstimmung mit der Viskosität des Prepolymers zum Einsatz kommen.

Diese Aufgabe wird durch eine Einkomponenten-Druckbehältermischung zur Herstellung von Polyurethanschaum gelöst, welche ein NCO-Gruppen enthaltendes Prepolymer aus einem Polyol und einem Polyisocyanat, sowie ggf. Flammschutzmittel, Stabilisatoren, Weichmacher, Katalysatoren und/oder andere übliche Bestandteile enthält, wobei das Prepolymer eine dynamische Viskosität bis 12000 mPa.s, vorzugsweise bis 10000 mPa.s, gemessen bei 20° C, aufweist, wobei ein die Viskosität herabsetzendes Lösungsmittel in Form eines niedrigsiedenden Ethers, Esters oder Ketons in einer Menge zugegen ist, die die dynamische Viskosität des Prepolymers auf einen Wert von 2500 bis 10000, vorzugsweise bis 7000 mPa.s herabsetzt, und daß sie mit 0,5 bis 35, 0 Gew.-% He, Ne, Ar, N₂, O₂, CO₂, N₂O und/oder Luft, bezogen auf enthaltenes Prepolymer, als Vorschäum- und Treibgas versetzt ist, wobei die Mischung wenigstens einen Teil davon gelöst enthält.

Der Erfindung liegt die Aufgabe zugrunde, einen Einkomponent-Polyurethanschaum zu entwickeln, der die Eigenschaften der bekannten Schäume aufweist, ohne die ozonschädlichen bzw. explosiven Treibgase weiter zu benutzen.

Das Prepolymer ist vorzugsweise so aufgebaut, daß es ein Molekulargewicht von 700 bis 10000, vorzugsweise 1400 bis 6000 und einen NCO-Gehalt von 10-18% aufweist.

Die Viskosität vermindernden Lösungsmittel sind Ether, wie Dimethylether oder Diethylether, niedrigsiedene Ester, wie Methalacetat oder Ethylacetat, und Ketone, wie Aceton oder Methylethylketon, sowie fluorierte Kohlenwasserstoffe, wie Freon 123 oder Freon 134. Bevorzugte Lösungsmittel sind niedrigsiedende Ketone, wie Aceton und Methylethylketon. Chlorierte Fluorkohlenwasserstoffe (FCKW's) kommen wegen ihres ozonabbauenden Verhaltens nicht in Frage, niedrigsiedende Kohlenwasserstoffe, wie Propan oder Butan, sind wegen ihrer relativ schlechten Lösungsmitttel eingenschaften nicht bevorzugt. Unter niedrigsiedenden viskositätsmindernden Lösungsmitteln werden solche verstanden, die innerhalb kurzer Zeit aus dem ausgebrachten Schaum verdunsten.

In Gegenwart des viskositätsmindernden Lösungsmittels beträgt die dynamische Viskosität des Prepolymeren 2500 bis 10000, insbesondere bis 7000 mPa.s.

Als Vorschäum- und Treibgase werden Helium, Neon, Argon, Stickstoff, Sauerstoff, Kohlendioxid, N₂O oder Luft zugesetzt, jeweils für sich allein oder in beliebiger Kombination. Bevorzugte Treibgase sind insbesondere Kohlendioxid und N₂O (Lachgas), die eine nicht unerhebliche Löslichkeit in organischen Flüssigkeiten zeigen. Bei Verwendung von Kohlendioxid und/oder N₂O bietet sich die Verwendung von Aceton oder Methylethylketon als viskositatsvermindernde Lösungsmittel an. Ketone, insbesondere unter für Druckbehälter üblichen Drücken, zeigen ein nicht unerhebliches Lösungsvermögen für CO₂.

Kohlendioxid wird bevorzugt in einer Menge von 0,5 bis 10 Gew.-%, besonders bevorzugt 1 bis 5 Gew.-%, bezogen auf das Prepolymer, zugesetzt.

Die erfindungsgemäßen Einkomponentenmischungen für die Herstellung von Polyurethanschaum weisen eine zufriedenstellende Lagerstabilität auf.

Für die Polyole kommen hydroxylgruppenhaltige Polyester und Polyether in Frage.

Polyester können beispielsweise aus Polycarbonsäuren, vorzugsweise Dicarbonsäuren und mehrwertigen Alkoholen hergestellt werden.

Genannt seien beispielhaft Polycarbonsäuren, wie Glutarsäure, Sebacinsäure, Phthalsäure, Isophthalsäure, Terephthalsäure und vorzugsweise Bernsteinsäure und Adipinsäure,. Beispiele für mehrwertige Alkohole sind Ethylenglykol, 1,2-Propylenglykol, 1,4-Butandiol, Diethylenglykol, Dipropylenglykol, 1,6-Hexandiol, Glycerin, Trimethylolpropan und Pentaerythrit.

Polyether können beispielsweise aus einem oder mehreren Alkylenoxiden mit 2-4 Kohlenstoffatomen im Alkylenrest und einem Startermolekül, das 2-4 vorzugsweise 2-3 aktive Wasserstoffatome enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid.

Die Alkylenoxide können einzeln, alternierend nacheinander oder als Mischung verwendet werden.

Als Startermoleküle kommen beispielsweise in Betracht Phosphorsäure, Wasser, Polycarbonsäuren, wie Adipinsäure, Bernsteinsäure und Phthalsäure, und vorzugsweise Polyhydroxylverbindungen, wie Ethylenglycol, Propylenglycol, Diethylenglycol, Trimethylolpropan und Glycerin.

Als Isocyanat kommen beispielhaft zum Einsatz Toluylendiisocyanate (2,4 und/oder 2,6) Isophorondiisocyanat, vorzugsweise Diisocyanatodiphenylmethan (Rein-MDI, Roh-MDI), sowie Gemische daraus.

Als Flammschutzmittel können beispielhaft zum Einsatz kommen Trialkylphosphate, wie TCEP, TCPP, TOF, Polybrombiphenylether, Polybrombisphenol A, Tetrabromphthalatdiol, sowie phosphor- und halogenhaltige Polyole.

Als Weichmacher kommen beispielhaft zum Einsatz diverse Flammschutzmittel, Butylbenzylphthalat, Dioctylphthalat und Trikresylphosphat.

Als Katalysatoren können beispielhaft zum Einsatz kommen Texacat DM 70, Texact DMDEE, Texacat DMP, Niax Al, Niax A 99.

Als Stabilisatoren eignen sich Copolymere aus Siloxan.

Alle Ausgangsstoffe sollen einen Wassergehalt von weniger als 0,3 Gew.-% aufweisen, bevorzugt weniger als 0,1 Gew.-%.

Die Erfindung betrifft weiter ein Verfahren zur Herstellung der erfindungsgemäßen Einkomponentenmischung.

Das Verfahren ist dadurch gekennzeichnet, daß in einem Reaktionsbehälter unter Steuerung der Reaktionstemperatur durch Zusammengeben der dafür benötigten Mengen an Polyol und Polyisocyanat ein Prepolymer mit einer dynamischen Viskosität bis 12000 mPa.s, gemessen bei 20°C, unter Zugabe der ggf. gewünschten Flammschutzmittel, Stabilisatoren, Weichmacher, Katalysatoren und/oder anderer üblichen Bestandteile sowie eines die Viskosität herabsetzenden Lösungsmittels in Form eines niedrigsiedenden Ethers, Esters oder Ketons in einer Menge, die die dynamische Viskosität des Prepolymers auf einen Wert von 2500 bis 10000, vorzugsweise bis 7000 mPa.s herabsetzt, gebildet wird und die Mischung, ggf. nach Abfüllen in einen Druckbehälter, mit He, Ne, Ar, N2, O2, CO2, N2O und/oder Luft als Vorschäum- oder Treibgas in einer Menge von 0,5 bis 35,0 Gew.-%, bezogen auf das Prepolymer, versetzt wird.

Die Viskosität ist für die erfindungsgemäße Anwendung von erheblicher Bedeutung. Daher muß der Prepolymerbildung besondere Sorgfalt gewidmet werden. Insbesondere muß die Temperatur bei der Herstellung sorgfältig gesteuert werden.

Im folgenden wird die Herstellung beispielhaft beschrieben, wobei die Reaktion in einem separaten Behälter stattfindet; die Komponenten können aber auch direkt in einem Aerosol- oder Druckbehälter umgesetzt werden, wenn die Einhaltung der erforderlichen Bedingungen gewährleistet ist.

Zur Prepolymerherstellung werden Polyole, vorzugsweise mit einer Hydroxylzahl von 45 bis 230, bevorzugt 170, und einem Molekulargewicht von 700 bis 2600, bevorzugt 1000 bis 2000, mit einem Weichmacher, vorzugsweise Butylbenzylphthalat und/oder einem Flammschutzmittel, vorzugsweise TCEP und einem Schaumstabilisator als Mischung hergestellt und auf eine Temperatur von ca. 20°C eingestellt.

Vorzugsweise sollte für die Reproduzierbarkeit der Wassergehalt auf einen Wert unter 0,1% standardisiert werden.

### Beispiel

In einem temperierbaren Rührkessel wird das Isocyanat vorgelegt und mit trockenem Stickstoff überlagert. Nachdem die Vorlage auf 25°C temperiert ist, wird die Polyolmischung langsam unter Rühren zugegeben. Dabei soll die Temperatur zwischen 30°C und 40°C gehalten werden.

Sobald die exotherme Reaktion abklingt, wird der Kesselinhalt innerhalb von 2-3 Stunden auf 80°C erwärmt und zwei Stunden bei dieser Temperatur gehalten. Danach wird auf 20°C abgekühlt. Ob die Substanzen der Polyolmischung getrennt oder auf einmal zugegeben werden, hängt von der Menge der Masse und der Kühlmöglichkeit ab. Es hat sich als vorteilhaft erwiesen, einen Teil der nicht reaktiven Flammschutzmittel und Weichmacher getrennt zu halten und mit diesen durch gezielte Zugabe unerwünschten Temperatursteigerungen zu begegnen.

Lösungsmittelbeimischungen erfolgen nach dem Herunterkühlen, bei zu hohen Temperaturen würde es verdampfen. Die Katalysatoren werden artspezifisch zur Prepolymersteuerung eingesetzt.

Nachdem alle Substanzen eingefüllt sind und alle Reaktionen wunschgemäß zum Stillstand gekommen sind, kann die Mischung in Druckbehälter, z.B. Aerosoldosen, eingefüllt werden. Nach dem Verschließen erfolgt die Beaufschlagung mit dem gewählten Treibgas bzw. den gewählten Mischungen. Es hat sich bewährt, das Gas in mehreren Chargen nacheinander einzupressen, um so dem Gas die Möglichkeit der optimalen Lösung zu geben.

In der nachfolgenden Tabelle sind dementsprechend hergestellte Einkomponentenmischungen aufgeführt, deren Zusammensetzung in Gew.-Teilen angegeben ist.

**Tabelle**

| | | | |
|---|---|---|---|
| 4,4'-Diphenylmethandiisocyanat | 55 | 55 | 55 |
| Gemisch Di- und Trifunktioneller Polyether | 27 | 30 | 26 |
| Butylbenzylphthalat | 16 | 20 | 20 |
| Schaumstabilisator | 1,2 | 1,5 | 2 |
| Katalysator | 0,3 | 0,3 | 0,3 |
| Aceton | 5 | - | 5 |
| Ethylacetat | - | 5 | - |
| CO₂ | 1,8 | 2,0 | - |
| He | - | - | 2,0 |

## Patentansprüche

1. Einkomponenten-Druckbehältermischung zur Herstellung von Polyurethanschaum, welche ein NCO-Gruppen enthaltendes Prepolymer aus einem Polyol und einem Polyisocyanat, sowie gegebenenfalls Flammschutzmittel, Stabilisatoren, Weichmacher, Katalysatoren und/oder andere übliche Bestandteile enthält, dadurch gekennzeichnet, daß das Prepolymer eine dynamische Viskosität bis 12000 mPa.s, vorzugsweise bis 10000 mPa.s, gemessen bei 20° C, aufweist, wobei ein die Viskosität herabsetzendes Lösungsmittel in Form eines niedrigsiedenden Ethers, Esters, Ketons, oder fluorierten Kohlenwasserstoffs in einer Menge zugegen ist, die die dynamische Viskosität des Prepolymers auf einen Wert von 2500 bis 10000, vorzugsweise bis 7000 mPa.s einstellt, und daß sie mit 0,5 bis 35,0 Gew.-% He, Ne, Ar, N₂, O₂, CO₂, N₂O und/oder Luft, bezogen auf enthaltenes Prepolymer, als Vorschäum- und Treibgas versetzt ist, wobei die Mischung wenigstens einen Teil davon gelöst enthält.

2. Mischung nach Anspruch 1, gekennzeichnet durch ein Molekulargewicht des Prepolymeren von 700 bis 10000, vorzugsweise von 1400 bis 6000.

3. Mischung nach Anspruch 1 oder 2, dadurch gekennzeichnet, daß das Prepolymer einen NCO-Gruppengehalt von 10 bis 18 Gew.-% hat.

4. Mischung nach einem der vorhergehenden Ansprüche, dadurch gekennzeichnet, daß sie weiterhin ein Siloxancopolymeres als Stabilisator enthält.

5. Mischung nach einander Ansprüche 1 bis 4, dadurch gekennzeichnet, daß das Lösungsmittel Aceton oder Ethylmethylketon ist.

6. Mischung nach einem der vorhergehenden Ansprüche, dadurch gekennzeichnet, daß sie ein Prepolymer aus einem Polyol mit einem Molekulargewicht von 700 bis 2600 und einer Hydroxylzahl von 45 bis 230 enthält.

7. Mischung nach Anspruch 6, dadurch gekennzeichnet, daß sie ein Prepolymer aus einem Polyol mit einem Molekulargewicht von 1000 bis 2000 und einer Hydroxylzahl von 170 enthält.

8. Mischung nach einem der Ansprüche 1 bis 7, dadurch gekennzeichnet, daß sie mit 0,5 bis 10, vorzugsweise 1 bis 5 Gew.-% CO₂, bezogen auf das Prepolymer, versetzt ist.

9. Verfahren zur Herstellung einer Mischung nach einem der Ansprüche 1 bis 8, dadurch gekennzeichnet, daß in einem Reaktionsbehälter unter Steuerung der Reaktionstemperatur durch Zusammengeben der dafür benötigten Mengen an Polyol und Polyisocyanat ein Prepolymer mit einer dynamischen Viskosität bis 12000 mPa.s, gemessen bei 20° C, gebildet wird, unter Zugabe der gegebenenfalls erwünschten Flammschutzmittel, Stabilisatoren, Weichmacher, Katalysatoren, und/oder anderer übliche Bestandteile sowie eines die Viskosität herabsetzenden Lösungsmittels in Form eines niedrigsiedenden Ethers, Esters oder Ketons in einer Menge, die die dynamische Viskosität des Prepolymers auf einen Wert von 2500 bis 10000, vorzugsweise bis 7000 mPa.s herabsetzt, und die Mischung, gegebenenfalls nach Abfüllen in einen Druckbehälter, mit He, Ne, Ar, N₂, O₂, CO₂, N₂O und/oder Luft als Vorschäum- oder Treibgas in einer Menge von 0,5 bis 35,0 Gew.-%, bezogen auf das Prepolymer, versetzt wird.

10. Verfahren nach Anspruch 9, dadurch gekennzeichnet, daß der Reaktionsbehälter eine Aerosoldose oder ein Druckbehälter zum Ausbringen des Schaums ist.

## Claims

1. Single component pressure container mixture for producing polyurethane foam which includes a prepolymer, containing NCO groups, of a polyol and a polyisocyanate and optionally flame retardant, stabilisers, plasticisers, catalysts, and/or other conventional components, characterised in that the prepolymer has a dynamic viscosity of up to 12000 mPa.s, preferably up to 10000 mPa.s, measured at 20°C, a solvent, which reduces the viscosity, being present in the form of a low boiling point ether, ester or ketone in an amount which adjusts the dynamic viscosity of the prepolymer to a value of 2500 to 10000, preferably to 7000 mPa.s and that it is mixed with 0.5 to 35.0 wt.% He, Ne, Ar, N₂, O₂, CO₂, N₂O and/or air with respect to the included prepolymer, as a prefoaming and propellant gas, the mixture containing at least a proportion thereof in solution.

2. A mixture as claimed in claim 1, characterised by a molecular weight of the prepolymer of 700 to 10000, preferably 1400 to 6000.

3. A mixture as claimed in claim 1 or 2, characterised in that the prepolymer has an NCO group content of 10 to 18 wt.%.

4. A mixture as claimed in one of the preceding claims, characterised in that it further contains a siloxane copolymer as a stabiliser.

5. A mixture as claimed in one of claims 1 to 4, characterised in that the solvent is acetone or ethylmethylketone.

6. A mixture as claimed in one of the preceding claims, characterised in that it contains a prepolymer of a polyol with a molecular weight 700 to 2600 and a hydroxyl number of 45 to 230.

7. A mixture as claimed in claim 6, characterised in that it contains a prepolymer of a polyol with a molecular weight of 1000 to 200 and a hydroxyl number of 170.

8. A mixture as claimed in one of claims 1 to 7, characterised in that it is mixed with 0.5 to 10, preferably 1 to 5, wt.% CO₂, with respect to the prepolymer.

9. A method of manufacturing a mixture as claimed in one of claims 1 to 8, characterised in that by adding together the necessary amounts of polyol and polyisocyanate a prepolymer is formed in a reaction vessel whilst controlling the reaction temperature with a dynamic viscosity of up to 12000 mPa.s, measured at 20°C, with the addition of the optionally desired flame retardant, stabilisers, plasticisers, catalysts and/or other conventional components and a solvent, which reduces the viscosity, in the form of a low boiling point ether, ester or ketone in an amount which reduces the dynamic viscosity of the prepolymer to a value of 2500 to 10000, preferably to 7000, mPa.s and the mixture is mixed, optionally after pouring it into a pressure container, with He, Ne, Ar, N₂, O₂, CO₂, N₂O and/or air as a prefoaming or propellant gas in an amount of 0.5 to 35.0 wt.%, with respect to the prepolymer.

10. A method as claimed in claim 9, characterised in that the reaction vessel is an aerosol can or a pressure container for producing the foam.

## Revendications

1. Mélange en un composant, en récipient sous pression, pour la préparation de mousses de polyuréthannes, ce mélange contenant un prépolymère à groupes NCO obtenu à partir d'un polyol et d'un polyisocyanate avec le cas échéant des agents ignifugeants, des stabilisants, des plastifiants, des catalyseurs et/ou d'autres constituants usuels, ce mélange se caractérisant en ce que le prépolymère a une viscosité dynamique de 12000 mPa.s au maximum, de préférence de 10 000 mPa.s au maximum, la mesure étant faite à 20°C, avec un solvant qui abaisse la viscosité, consistant en un éther, un ester ou une cétone à bas point d'ébullition, en quantité suffisante pour régler la viscosité dynamique du prépolymère à un niveau de 2500 à 10 000, de préférence de 7 000 mPa.s au maximum, et en ce qu'il est additionné de He, Ne, Ar, N₂, O₂, CO₂, N₂O et/ou l'air, en tant que gaz de gonflement préalable et gaz porogènes, en quantité de 0,5 à 35,0 % du poids du prépolymère, le mélange contenant au moins une partie de ces gaz à l'état dissous.

2. Mélange selon la revendication 1, caractérisé en ce que le prépolymère a un poids moléculaire de 700 à 10 000, de préférence de 1 400 à 6 000.

3. Mélange selon la revendication 1 ou 2, caractérisé en ce que le prépolymère a une teneur en groupes NCO de 10 à 18 % en poids.

4. Mélange selon une des revendications qui précèdent, caractérisé en ce qu'il contient en outre un copolymère de siloxane en tant que stabilisant.

5. Mélange selon une des revendications 1 à 4, caractérisé en ce que le solvant consiste en l'acétone ou la méthyléthylcétone.

6. Mélange selon une des revendications qui précèdent, caractérisé en ce qu'il contient un prépolymère obtenu à partir d'un polyol de poids moléculaire 700 à 2 600 et d'indice d'hydroxyde 45 à 230.

7. Mélange selon la revendication 6, caractérisé en ce qu'il contient un prépolymère obtenu à partir d'un polyol de poids moléculaire 1 000 à 2 000 et d'indice d'hydroxyle 170.

8. Mélange selon une des revendications 1 à 7, caractérisé en ce qu'il est additionné de CO₂ en quantité de 0,5 à 10, de préférence de 1 à 5 % du poids du prépolymère.

9. Procédé de préparation d'un mélange selon une des revendications 1 à 8, caractérisé en ce que, dans un récipient de réaction et avec contrôle de la température de réaction, on forme un prépolymère ayant une viscosité dynamique allant jusqu'à 12 000 mPa.s, la mesure étant faite à 20°C, par contact des quantités nécessaires à cet effet de polyol et de polyisocyanate, avec adjonction le cas échéant d'agents ignifugeants, de stabilisants, de plastifiants, de catalyseurs et/ou d'autres constituants usuels et d'un solvant qui abaisse la viscosité et consiste en un éther, un ester ou une cétone à bas point d'ébullition, en quantité suffisante pour abaisser la viscosité dynamique du prépolymère à un niveau de 2 500 à 10 000, de préférence de 7 000 mPa.s au maximum, et on ajoute au mélange le cas échéant, après l'avoir introduit dans un récipient sous pression, He, Ne, Ar, N₂, O₂, CO₂, N₂O et/ou l'air, en tant que gaz de gonflement préalable ou gaz porogènes, en quantité de 0,5 à 35,0 % du poids du prépolymère.

10. Procédé selon la revendication 9, caractérisé en ce que le récipient de réaction est une boîte aérosol ou un récipient sous pression prévu pour délivrer la mousse.
